# EUROPÄISCHE PATENTANMELDUNG

(11) **EP 3 501 647 A1**
(43) Veröffentlichungstag der Anmeldung: **26.06.2019**
(21) Anmeldenummer: 17208614.2
(22) Anmeldetag: 19.12.2017
(51) Int. Cl.: B01J 37/02, B01J 35/00, B01J 23/63, B01D 53/94, F01N 3/10, F01N 3/035

(54) **KATALYTISCH AKTIVES PARTIKELFILTER**

(60) Teilanmeldung: 18193827.5
(71) Anmelder: UMICORE AG & CO. KG, 63457 Hanau-Wolfgang (DE)
(72) Erfinder: SCHOENHABER, Jan, 64287 Darmstadt (DE); DEIBEL, Naina, 64319 Pfungstadt (DE); ROESCH, Martin, 63110 Rodgau (DE); SPIESS, Stephanie, 64289 Darmstadt (DE)

(57) **Zusammenfassung**

Die vorliegende Erfindung betrifft ein Partikelfilter, das ein Wandflussfilter der Länge L und zwei katalytisch aktive Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. O_{A} bilden und wobei die Kanäle E am zweiten Ende und die Kanäle A am ersten Ende verschlossen sind, und wobei die Beschichtungen Y und Z gleiche Sauerstoffspeicherkomponenten und gleiche Trägermaterialien für Edelmetalle umfassen, dadurch gekennzeichnet, dass sich Beschichtung Y in den Kanälen E auf den Oberflächen O_{E} und Beschichtung Z in den Kanälen A auf den Oberflächen O_{A} befindet.

## Beschreibung

Die vorliegende Erfindung betrifft ein katalytisch aktives Partikelfilter, das sich insbesondere für die Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren eignet.

Abgase von mit stöchiometrischem Luft/Kraftstoff-Gemisch betriebenen Verbrennungsmotoren, also Benzinmotoren, werden in herkömmlichen Verfahren mit Hilfe von Dreiwege-Katalysatoren gereinigt. Diese sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen.
Neben diesen gasförmigen Schadstoffen enthält das Abgas von Benzinmotoren aber auch feinste Partikel (PM), die aus der unvollständigen Verbrennung des Kraftstoffs resultieren und im Wesentlichen aus Ruß bestehen. Im Unterschied zur Partikelemission von Dieselmotoren sind die Partikel im Abgas stöchiometrisch betriebener Verbrennungsmotoren sehr klein und weisen eine durchschnittliche Partikelgröße kleiner 1 µm auf. Typische Partikelgrößen liegen im Bereich 10 bis 200 nm. Des Weiteren ist die emittierte Partikelmenge sehr gering und bewegt sich im Bereich von 2 bis 4 mg/km.
Mit der europäischen Abgasnorm EU-6c ist eine Umstellung des Grenzwertes für solche Partikel vom Partikelmassengrenzwert auf einen kritischeren Partikelzahlgrenzwert von 6 x 10¹¹/km (im Worldwide harmonized Light vehicles Test Cycle - WLTP) verbunden. Damit entsteht Bedarf nach Abgasreinigungskonzepten für stöchiometrisch betriebene Verbrennungsmotoren, die effektiv arbeitende Einrichtungen zur Entfernung von Partikeln umfassen.

Im Bereich der Reinigung von Abgas von mager betriebenen Motoren, also insbesondere von Dieselmotoren, haben sich Wandflussfilter aus keramischen Materialien, wie z.B. Siliciumcarbid, Aluminiumtitanat und Cordierit bewährt. Diese sind aus einer Vielzahl von parallelen Kanälen aufgebaut, die durch poröse Wände gebildet werden. Die Kanäle sind wechselseitig an einem der beiden Enden des Filters verschlossen, so dass Kanäle A gebildet werden, die an der ersten Seite des Filters offen und auf der zweiten Seite des Filters verschlossen sind, sowie Kanäle B, die an der ersten Seite des Filters verschlossen und auf der zweiten Seite des Filters offen sind. Das beispielsweise in die Kanäle A einströmende Abgas kann den Filter nur über die Kanäle B wieder verlassen, und muss zu diesem Zweck durch die porösen Wände zwischen den Kanälen A und B durchfließen. Beim Durchtritt des Abgases durch die Wand werden die Partikel zurückgehalten und das Abgas gereinigt.
Die so zurückgehaltenen Partikel müssen nachfolgend abgebrannt bzw. oxidiert werden, um ein Verstopfen des Filters bzw. einen inakzeptablen Anstieg des Gegendrucks des Abgassystems zu verhindern. Zu diesem Zweck wird beispielsweise das Wandflussfilter mit katalytisch aktiven Beschichtungen versehen, die die Zündtemperatur von Ruß herabsetzen.
Es ist bereits bekannt, solche Beschichtungen auf die porösen Wände zwischen den Kanälen aufzubringen (sogenannte auf-Wand-Beschichtung) oder in die porösen Wände einzubringen (sogenannte in-Wand-Beschichtung). Die EP 1 657 410 A2 beschreibt auch bereits eine Kombination beider Beschichtungsarten, d.h. ein Teil des katalytisch aktiven Materials liegt in den porösen Wänden und ein anderer Teil auf den porösen Wänden vor.

Das Konzept, Partikel mittels Wandflussfiltern aus dem Abgas zu entfernen, ist bereits auf die Reinigung von Abgas von mit stöchiometrischem Luft/Kraftstoff-Gemisch betriebenen Verbrennungsmotoren übertragen worden, siehe zum Beispiel die EP 2042226 A2. Gemäß deren Lehre trägt ein Wandflussfilter zwei übereinander angeordnete Schichten, wobei eine in der porösen Wand und die andere auf der porösen Wand angeordnet sein kann.
Ein ähnliches Konzept verfolgt die DE 102011050788 A1. Dort enthalten die porösen Filterwände ein Katalysatormaterial eines Drei-Wege-Katalysators, während zusätzlich ein Katalysatormaterial eines Drei-Wege-Katalysators auf Teilbereiche der Filterwände aufgebracht ist.

Weitere Dokumente, die mit katalytisch aktiven Beschichtungen versehene Filtersubstrate beschreiben, sind EP 3205388 A1, EP 3207977 A1, EP 3207978 A1, EP 3207987 A1, EP 3207989 A1, EP 3207990 A1 und EP 3162428 A1.

Es besteht weiter Bedarf nach katalytisch aktiven Partikelfiltern, die die Funktionalitäten eines Partikelfilters und eines Dreiwegekatalysators vereinen und dabei die künftig geltenden Grenzwerte einzuhalten erlauben.

Die vorliegende Erfindung betrifft einen Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, das ein Wandflussfilter der Länge L und zwei Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. O_{A} bilden und wobei die Kanäle E am zweiten Ende und die Kanäle A am ersten Ende verschlossen sind, und wobei die Beschichtungen Y und Z gleiche Sauerstoffspeicherkomponenten und gleiche Trägermaterialien für Edelmetalle umfassen, dadurch gekennzeichnet, dass sich Beschichtung Y in den Kanälen E auf den Oberflächen O_{E} befindet und sich ausgehend vom ersten Ende des Wandflussfilters auf einer Länge von 51 bis 90 % der Länge L erstreckt und sich Beschichtung Z in den Kanälen A auf den Oberflächen O_{A} befindet und sich ausgehend vom zweiten Ende des Wandflussfilters auf einer Länge von 51 bis 90 % der Länge L erstreckt.

Die Beschichtungen Y und Z sind Dreiwege-katalytisch aktiv, insbesondere bei Betriebstemperaturen von 250 bis 1100 °C. Sie enthalten üblicherweise ein oder mehrere Edelmetalle, die auf einem oder mehreren Trägermaterialien fixiert sind, sowie ein oder mehrere Sauerstoffspeicherkomponenten.
Die Beschichtungen X und Y umfassen gleiche Sauerstoffspeicherkomponenten und gleiche Trägermaterialien für Edelmetalle in verschiedenen, bevorzugt aber in gleichen Mengen. Die Beschichtungen X und Y enthalten daneben gleiche oder verschiedene Edelmetalle in gleichen oder verschiedenen Mengen.

Als Edelmetalle kommen insbesondere Platin, Palladium und Rhodium in Frage, wobei Palladium, Rhodium oder Palladium und Rhodium bevorzugt und Palladium und Rhodium besonders bevorzugt sind.
Bezogen auf das erfindungsgemäße Partikelfilter ist der Anteil von Rhodium am gesamten Edelmetallgehalt insbesondere größer oder gleich 10 Gew.-%.

Die porösen Wände des erfindungsgemäßen Partikelfilters sind bevorzugt frei von Edelmetallen.

Die Edelmetalle werden üblicherweise in Mengen von 0,15 bis 5 g/l, bezogen auf das Volumen des Wandflussfilters eingesetzt.

Als Trägermaterialien für die Edelmetalle kommen alle dem Fachmann für diesen Zweck geläufigen Materialien in Betracht. Solche Materialien sind insbesondere Metalloxide mit einer BET-Oberfläche von 30 bis 250 m²/g, bevorzugt von 100 bis 200 m²/g (bestimmt nach DIN 66132).
Besonders geeignete Trägermaterialien für die Edelmetalle sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise Lanthanoxid-, Zirkoniumoxid- und/oder Titanoxid-dotierte Aluminiumoxide. Mit Vorteil wird Lanthan-stabilisiertes Aluminiumoxid eingesetzt, wobei Lanthan in Mengen von 1 bis 10 Gew.-%, bevorzugt 3 bis 6 Gew.-%, jeweils berechnet als La₂O₃ und bezogen auf das Gewicht des stabilisierten Aluminiumoxides, verwendet wird.

Ein weiteres geeignetes Trägermaterial ist Lanthan-stabilisiertes Aluminiumoxid, dessen Oberfläche mit Lanthanoxid, mit Bariumoxid oder mit Strontiumoxid beschichtet ist.

Als Sauerstoffspeicherkomponente kommen insbesondere Cer/Zirkonium/ Seltenerdmetall-Mischoxide in Frage. Der Begriff "Cer/Zirkonium/ Seltenerdmetall-Mischoxid" im Sinne vorliegender Erfindung schließt physikalische Mischungen aus Ceroxid, Zirkoniumoxid und Seltenerdoxid aus. Vielmehr sind "Cer/Zirkonium/Seltenerdmetall-Mischoxide" durch eine weitgehend homogene, dreidimensionale Kristallstruktur gekennzeichnet, die idealerweise frei ist von Phasen aus reinem Ceroxid, Zirkoniumoxid bzw. Seltenerdoxid. Je nach Herstellungsverfahren können aber auch nicht vollständig homogene Produkte entstehen, die in der Regel ohne Nachteil verwendet werden können.
Im Übrigen umfasst der Begriff Seltenerdmetall bzw. Seltenerdmetalloxid im Sinne vorliegender Erfindung kein Cer bzw. kein Ceroxid.

Als Seltenerdmetalloxide in den Cer/Zirkonium/Seltenerdmetall-Mischoxiden kommen beispielsweise Lanthanoxid, Yttriumoxid, Praseodymoxid, Neodymoxid und/oder Samariumoxid in Betracht.
Bevorzugt sind Lanthanoxid, Yttriumoxid und/oder Praseodymoxid. Besonders bevorzugt sind Lanthanoxid und/oder Yttriumoxid und ganz besonders bevorzugt sind Lanthanoxid und Yttriumoxid, Yttriumoxid und Praseodymoxid, sowie Lanthanoxid und Praseodymoxid.
In Ausführungsformen der vorliegenden Erfindung sind die Sauerstoffspeicherkomponenten frei von Neodymoxid.

Erfindungsgemäß kann das Masseverhältnis von Ceroxid zu Zirkoniumoxid in den Cer/Zirkonium/Seltenerdmetall-Mischoxiden in weiten Grenzen variieren. Es beträgt beispielsweise 0,1 bis 1,5, bevorzugt 0,2 bis 1 oder 0,3 bis 0,5.

Sofern die Cer/Zirkonium/Seltenerdmetall-Mischoxide als Seltenerdmetall Yttriumoxid enthalten, so ist dessen Anteil insbesondere 5 bis 15 Gew.-%.

Sofern die Cer/Zirkonium/Seltenerdmetall-Mischoxide als Seltenerdmetall Praseodymoxid enthalten, so ist dessen Anteil insbesondere 2 bis 10 Gew.-%.

Sofern die Cer/Zirkonium/Seltenerdmetall-Mischoxide als Seltenerdmetall Lanthanoxid und Yttriumoxid enthalten, so ist dessen Massenverhältnis insbesondere 0,1 bis 1.

Sofern die Cer/Zirkonium/Seltenerdmetall-Mischoxide als Seltenerdmetall Lanthanoxid und Praseodymoxid enthalten, so ist dessen Massenverhältnis insbesondere 0,1 bis 1.

Üblicherweise enthalten die Beschichtungen Y und Z Sauerstoffspeicherkomponenten in Mengen von 15 bis 120 g/l, bezogen auf das Volumen des Wandflussfilters.

Das Masseverhältnis von Trägermaterialien und Sauerstoffspeicherkomponenten in den Beschichtungen Y und Z beträgt üblicherweise 0,3 bis 1,5, beispielsweise 0,4 bis 1,3.

In Ausführungsformen der vorliegenden Erfindung enthalten eine oder beide der Beschichtungen Y und Z eine Erdalkaliverbindung wie z.B. Strontiumoxid, Bariumoxid oder Bariumsulfat. Die Menge an Bariumsulfat je Beschichtung beträgt insbesondere 2 bis 20 g/l Volumen des Wandflussfilters.

In weiteren Ausführungsformen der vorliegenden Erfindung enthalten eine oder beide der Beschichtungen Y und Z Additive wie Seltenerdverbindungen wie z.B. Lanthanoxid und/oder Binder, wie z.B. Aluminiumverbindungen. Diese Additive werden in Mengen verwendet, die in weiten Grenzen variieren können und die der Fachmann im konkreten Fall mit einfachen Mitteln bestimmen kann.

In Ausführungsformen der vorliegenden Erfindung umfassen die Beschichtungen X und Y Lanthan-stabilisiertes Aluminiumoxid, Rhodium, Palladium oder Palladium und Rhodium und eine Zirkoniumoxid, Ceroxid, Yttriumoxid und Lanthanoxid umfassende Sauerstoffspeicherkomponente.

In anderen Ausführungsformen der vorliegenden Erfindung umfassen die Beschichtungen X und Y Lanthan-stabilisiertes Aluminiumoxid, Rhodium, Palladium oder Palladium und Rhodium und eine Zirkoniumoxid, Ceroxid, Praseodymoxid und Lanthanoxid umfassende Sauerstoffspeicherkomponente.

In anderen Ausführungsformen der vorliegenden Erfindung umfassen die Beschichtungen X und Y Lanthan-stabilisiertes Aluminiumoxid, Rhodium, Palladium oder Palladium und Rhodium, eine erste Zirkoniumoxid, Ceroxid, Yttriumoxid und Lanthanoxid umfassende Sauerstoffspeicherkomponente, sowie eine zweite Zirkoniumoxid, Ceroxid, Yttriumoxid und Praseodymoxid umfassende Sauerstoffspeicher-komponente.

Die Beschichtungen Y und Z umfassen in Ausführungsformen jeweils Lanthan-stabilisiertes Aluminiumoxid in Mengen von 20 bis 70 Gew.-%, besonders bevorzugt 30 bis 60 Gew.-%, sowie die Sauerstoffspeicherkomponente in Mengen von 30 bis 80 Gew.-%, besonders bevorzugt 40 bis 70 Gew.-%, jeweils bezogen auf das Gesamtgewicht der Beschichtung Y bzw. Z.

In Ausführungsformen der vorliegenden Erfindung erstreckt sich die Beschichtung Y ausgehend vom ersten Ende des Wandflussfilters über 55 bis 80 %, insbesondere über 57 bis 65 % der Länge L des Wandflussfilters. Die Beladung des Wandflussfilters mit Beschichtung Y beträgt bevorzugt 33 bis 125 g/l, bezogen auf das Volumen des Wandflussfilters.

In Ausführungsformen der vorliegenden Erfindung erstreckt sich die Beschichtung Z ausgehend vom zweiten Ende des Wandflussfilters über 55 bis 80 %, insbesondere über 57 bis 65 % der Länge L des Wandflussfilters. Die Beladung des Wandflussfilters mit Beschichtung Z beträgt bevorzugt 33 bis 125 g/l, bezogen auf das Volumen des Wandflussfilters.

In Ausführungsformen der vorliegenden Erfindung beträgt die Summe der Längen von Beschichtung Y und Beschichtung Z 110 bis 160 % der Länge L.

In Ausführungsformen der vorliegenden Erfindung enthalten die Beschichtungen Y und Z keinen Zeolithen und kein Molsieb.

Die Gesamtbeladung des erfindungsgemäßen Partikelfilters mit den Beschichtungen Y und Z beträgt insbesondere 40 bis 150 g/l, bezogen auf das Volumen des Wandflussfilters.
In einer Ausführungsform der vorliegenden Erfindung betrifft diese ein Partikelfilter, das ein Wandflussfilter der Länge L und zwei Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. O_{A} bilden und wobei die Kanäle E am zweiten Ende und die Kanäle A am ersten Ende verschlossen sind, und wobei die Beschichtungen Y und Z gleiche Sauerstoffspeicherkomponenten und gleiche Trägermaterialien für Edelmetalle umfassen, dadurch gekennzeichnet, dass
Beschichtung Y sich in den Kanälen E auf den Oberflächen O_{E} befindet und sich ausgehend vom ersten Ende des Wandflussfilters über 57 bis 65 % der Länge L erstreckt,
Beschichtung Z sich in den Kanälen A auf den Oberflächen O_{A} befindet und sich ausgehend vom zweiten Ende des Wandflussfilters über 57 bis 65 % der Länge L erstreckt,
und die Beschichtungen Y und Z Aluminiumoxid in einer Menge von 20 bis 70 Gew.-%, bezogen auf das Gesamtgewicht der Beschichtung Y bzw. Z, Rhodium, Palladium oder Palladium und Rhodium und eine Sauerstoffspeicherkomponente in einer Menge von 30 bis 80 Gew.-%, bezogen auf das Gesamtgewicht der Beschichtung Y bzw. Z enthält, wobei die Sauerstoffspeicherkomponente Zirkoniumoxid, Ceroxid, Lanthanoxid und Yttriumoxid oder Zirkoniumoxid, Ceroxid, Lanthanoxid und Praseodymoxid oder eine Mischung aus zwei Sauerstoffspeicherkomponenten umfasst, wobei eine Sauerstoffspeicherkomponente Zirkoniumoxid, Ceroxid, Lanthanoxid und Yttriumoxid und die andere Zirkoniumoxid, Ceroxid, Lanthanoxid und Praseodymoxid enthält.

Wandflussfilter, die gemäß vorliegender Erfindung verwendet werden können, sind bekannt und am Markt erhältlich. Sie bestehen beispielsweise aus Silicium-Carbid, Aluminium-Titanat oder Cordierit, haben beispielsweise eine Zelligkeit von 200 bis 400 Zellen pro Inch und üblicherweise eine Wandstärke zwischen 6 und 12 Mil, bzw. 0,1524 und 0,305 Millimeter
Sie weisen in unbeschichtetem Zustand beispielsweise Porositäten von 50 bis 80, insbesondere 55 bis 75% auf. Ihre durchschnittliche Porengröße beträgt in unbeschichtetem Zustand beispielsweise 10 bis 25 Mikrometer. In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Die Herstellung des erfindungsgemäßen Partikelfilters kann nach dem Fachmann geläufigen Methoden erfolgen, so etwa dadurch, dass eine Beschichtungssuspension, die üblicherweise Washcoat genannt wird, mittels eines der üblichen Tauchbeschichtungsverfahren bzw. Pump- und Saug-Beschichtungsverfahren auf das Wandflussfilter appliziert wird. Thermische Nachbehandlung bzw. Kalzination schließen sich üblicherweise an.
Die Beschichtungen Y und Z werden in getrennten und aufeinanderfolgenden Beschichtungsschritten erhalten.

Dem Fachmann ist bekannt, dass die durchschnittliche Porengröße des Wandflussfilters und die mittlere Teilchengröße der katalytisch aktiven Materialien aufeinander abgestimmt werden müssen, um eine auf-Wand-Beschichtung oder eine in-Wand-Beschichtung zu erzielen. In Fall der in-Wand-Beschichtung muss die mittlere Teilchengröße der katalytisch aktiven Materialien klein genug sein, um in die Poren des Wandflussfilters einzudringen. Dagegen muss im Fall der auf-Wand-Beschichtung die mittlere Teilchengröße der katalytisch aktiven Materialien groß genug sein, um nicht in die Poren des Wandflussfilters einzudringen.

In Ausführungsformen der vorliegenden Erfindung werden die Beschichtungssuspensionen zur Herstellung der Beschichtungen Y und Z bis zu einer Partikelgrößenverteilung von dso = 4 bis 8 µm und d₉₉ = 22 bis 16 µm gemahlen.

Das erfindungsgemäße Partikelfilter eignet sich hervorragend zur Entfernung von Partikeln, Kohlenmonoxid, Kohlenwasserstoffen und Stickoxiden aus dem Abgas von mit stöchiometrischem Luft/KraftstoffGemisch betriebenen Verbrennungsmotoren.

Die vorliegende Erfindung betrifft somit auch ein Verfahren zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren, das dadurch gekennzeichnet ist, dass das Abgas über ein erfindungsgemäßes Partikelfilter geleitet wird.

Dabei kann das Abgas so über ein erfindungsgemäßes Partikelfilter geleitet werden, dass es durch die Kanäle E in das Partikelfilter eintritt und es durch Kanäle A wieder verlässt.
Es ist aber auch möglich, dass das Abgas durch die Kanäle A in das Partikelfilter eintritt und es durch Kanäle E wieder verlässt.

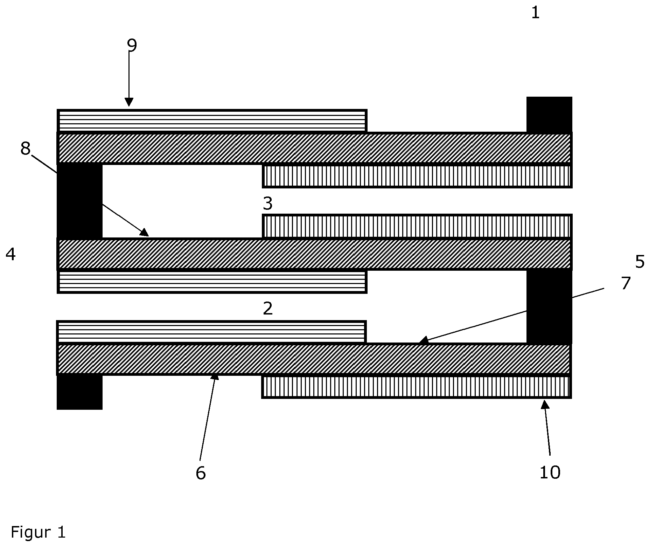

Figur 1 zeigt ein erfindungsgemäßes Partikelfilter, das ein Wandflussfilter der Länge L (1) mit Kanälen E (2) und Kanälen A (3) umfasst, die sich parallel zwischen einem ersten Ende (4) und einem zweiten Ende (5) des Wandflussfilters erstrecken und die durch poröse Wände (6) getrennt sind, die Oberflächen O_{E} (7) bzw. O_{A} (8) bilden und wobei die Kanäle E (2) am zweiten Ende (5) und die Kanäle A (3) am ersten Ende (4) verschlossen sind. Beschichtung Y (9) befindet sich in den Kanälen E (2) auf den Oberflächen O_{E} (7) und Beschichtung Z (10) in den Kanälen A (3) auf den Oberflächen O_{A} (8).

Die Erfindung wird in den nachstehenden Beispielen näher erläutert.

### Vergleichsbeispiel 1

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 75 g/l, die Gesamtedelmetallbeladung 1,27 g/l mit einem Verhältnis von Palladium zu Rhodium von 5 : 1. Der so erhaltene beschichtete Filter wurde getrocknet und anschließend kalziniert. Er wird nachstehend als VGPF1 bezeichnet.

### Beispiel 1

### Beschichtung der Eingangs und Ausgangskanäle:

Mit Lanthanoxid stabilisiertes Aluminiumoxid wurde zusammen mit einer Sauerstoffspeicherkomponente, die 24 Gew.-% Ceroxid, Zirkonoxid, Lanthanoxid und Yttriumoxid umfasste, in Wasser suspendiert. Das Gewichtsverhältnis von Aluminiumoxid und Sauerstoffspeicherkomponente betrug 56:44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension auf die Filterwände des Substrats beschichtet und zwar zuerst in den Eingangskanälen auf eine Länge von 60 % der Filterlänge. Die Beladung des Einlasskanals betrug 62,5 g/l, die Edelmetallbeladung 1,06 g/l mit einem Verhältnis von Palladium zu Rhodium von 5 : 1. Der so erhaltene beschichtete Filter wurde getrocknet und anschließend kalziniert. Anschließend wurden die Ausgangskanäle des Filters auf eine Länge von 60 % der Filterlänge mit der gleichen Beschichtungssuspension beschichtet. Der so erhaltene beschichtete Filter wurde erneut getrocknet und anschließend kalziniert. Die Gesamtbeladung dieses Filters betrug somit 75 g/l, die Gesamtedelmetallbeladung 1,27 g/l mit einem Verhältnis von Palladium zu Rhodium von 5 : 1. Er wird nachstehend als GPF1 bezeichnet.

### Beispiel 2

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension auf die Filterwände des Substrats beschichtet und zwar zuerst in den Eingangskanälen auf eine Länge von 60 % der Filterlänge. Die Beladung des Einlasskanals betrug 62,5 g/l, die Edelmetallbeladung 1,06 g/l mit einem Verhältnis von Palladium zu Rhodium von 5 : 1. Der so erhaltene beschichtete Filter wurde getrocknet und anschließend kalziniert. Anschließend wurden die Ausgangskanäle des Filters auf eine Länge von 60 % der Filterlänge mit der gleichen Beschichtungssuspension beschichtet. Der so erhaltene beschichtete Filter wurde erneut getrocknet und anschließend kalziniert. Die Gesamtbeladung dieses Filters betrug somit 75 g/l, die Gesamtedelmetallbeladung 1,27 g/l mit einem Verhältnis von Palladium zu Rhodium von 5 : 1. Er wird nachstehend als GPF2 bezeichnet.

### Katalytische Charakterisierung

Die Partikelfilter VGPF1, GPF1 und GPF2 wurden zusammen in einer Motorprüfstandsalterung gealtert. Diese besteht aus einer Schubabschaltungsalterung mit 950°C Abgastemperatur vor Katalysatoreingang (Maximale Betttemperatur 1030°C). Die Alterungszeit betrug 19 Stunden (siehe Motortechnische Zeitschrift, 1994, 55, 214-218).
Anschließend wurden die katalytisch aktiven Partikelfilter im gealterten Zustand an einem Motorprüfstand im sogenannten "Light-off Test" und im "lambda Sweeptest" getestet. Bei dem Light-off Test wird das Anspringverhalten bei stöchiometrischer Abgaszusammensetzung mit konstanter mittlerer Luftzahl λ bestimmt (λ =0,999 mit ±3,4% Amplitude).

Die nachfolgende Tabelle 1 enthält die Temperaturen Tso, bei denen jeweils 50% der betrachteten Komponenten umgesetzt werden.

**Tabelle 1**

| | T₅₀ HC stöch | T₅₀ CO stöch | T₅₀ NOx stöch |
|---|---|---|---|
| VGPF1 | 376 | 384 | 398 |
| GPF1 | 340 | 342 | 340 |
| GPF2 | 376 | 384 | 390 |

Das dynamische Umsatzverhalten der Partikelfilter im lambda Sweeptest wurde in einem Bereich von λ = 0,99 - 1,01 bei einer konstanten Temperatur von 510°C bestimmt. Die Amplitude von λ betrug dabei ±3,4%. Tabelle 2 enthält den Umsatz am Schnittpunkt der CO- und der NOx-Umsatzkurven, sowie den zugehörigen HC-Umsatz der gealterten Partikelfilter.

**Tabelle 2**

| | CO/NOx Umsatz am Kreuzungspunkt | HC Umsatz am λ des CO/NOx Kreuzungspunktes |
|---|---|---|
| VGPF1 | 83% | 96% |
| GPF1 | 96% | 97% |
| GPF2 | 90% | 97% |

Die erfindungsgemäßen Partikelfilter GPF1 und GPF2 zeigen gegenüber VGPF1 im gealterten Zustand eine deutliche Verbesserung beim Anspringverhalten und beim dynamischen CO/NOx-Umsatz.

### Vergleichsbeispiel 2:

### a) Aufbringen der Inwandbeschichtung:

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 100 g/l, die Edelmetallbeladung 2,60 g/l mit einem Verhältnis von Palladium zu Rhodium von 60 : 13,75. Der so erhaltene beschichtete Filter wurde getrocknet und anschließend kalziniert.

### b) Beschichtung der Eingangskanäle

Mit Lanthanoxid stabilisiertes Aluminiumoxid wurde zusammen mit einer Sauerstoffspeicherkomponente, die 40 Gew.-% Ceroxid, Zirkonoxid, Lanthanoxid und Praseodymoxid umfasste, in Wasser suspendiert. Das Gewichtsverhältnis von Aluminiumoxid und Sauerstoffspeicherkomponente betrug 50:50. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter a) erhaltenen Wandflussfiltersubstrats eingesetzt, wobei auf die Filterwände des Substrats beschichtet wurde und zwar in den Eingangskanälen auf eine Länge von 25 % der Filterlänge. Die Beladung des Eingangskanals betrug 58 g/l, die Edelmetallbeladung 2,30 g/l mit einem Verhältnis von Palladium zu Rhodium von 10 : 3. Der so erhaltene beschichtete Filter wurde getrocknet und anschließend kalziniert.

### c) Beschichtung der Ausgangskanäle

Mit Lanthanoxid stabilisiertes Aluminiumoxid wurde zusammen mit einer Sauerstoffspeicherkomponente, die 24 Gew.-% Ceroxid, Zirkonoxid, Lanthanoxid und Yttriumoxid umfasste, in Wasser suspendiert. Das Gewichtsverhältnis von Aluminiumoxid und Sauerstoffspeicherkomponente betrug 56:44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter b) erhaltenen Wandflussfiltersubstrats eingesetzt, wobei auf die Filterwände des Substrats beschichtet wurde und zwar in den Ausgangskanälen auf eine Länge von 25 % der Filterlänge. Die Beladung des Auslasskanals betrug 59 g/l, die Edelmetallbeladung 1,06 g/l mit einem Verhältnis von Palladium zu Rhodium von 1 : 2. Der so erhaltene beschichtete Filter wurde getrocknet und anschließend kalziniert. Die Gesamtbeladung dieses Filters betrug somit 130 g/l, die Gesamtedelmetallbeladung 3,44 g/l mit einem Verhältnis von Palladium zu Rhodium von 10 : 3. Er wird nachstehend als VGPF2 bezeichnet.

### Vergleichsbeispiel 3:

### a) Aufbringen der Inwandbeschichtung:

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Beladung dieses Filters betrug 100 g/l, die Edelmetallbeladung 2,07 g/l mit einem Verhältnis von Palladium zu Rhodium von 45 : 13,5. Der so erhaltene beschichtete Filter wurde getrocknet und anschließend kalziniert.

### b) Beschichtung der Eingangskanäle

Mit Lanthanoxid stabilisiertes Aluminiumoxid wurde zusammen mit einer Sauerstoffspeicherkomponente, die 40 Gew.-% Ceroxid, Zirkonoxid, Lanthanoxid und Praseodymoxid umfasste, in Wasser suspendiert. Das Gewichtsverhältnis von Aluminiumoxid und Sauerstoffspeicherkomponente betrug 50:50. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung des unter a) erhaltenen Wandflussfiltersubstrats eingesetzt, wobei auf die Filterwände des Substrats beschichtet wurde und zwar in den Eingangskanälen auf eine Länge von 60 % der Filterlänge. Die Beladung des Eingangskanals betrug 90 g/l, die Edelmetallbeladung 2,30 g/l mit einem Verhältnis von Palladium zu Rhodium von 10 : 3. Der so erhaltene beschichtete Filter wurde getrocknet und anschließend kalziniert. Die Gesamtbeladung dieses Filters betrug somit 154 g/l, die Gesamtedelmetallbeladung 3,44 g/l mit einem Verhältnis von Palladium zu Rhodium von 10 : 3.Er wird nachstehend als VGPF3 bezeichnet.

### Beispiel 3

### Beschichtung der Eingangskanäle

a) Mit Lanthanoxid stabilisiertes Aluminiumoxid wurde zusammen mit einer Sauerstoffspeicherkomponente, die 24 Gew.-% Ceroxid, Zirkonoxid, Lanthanoxid und Yttriumoxid umfasste, in Wasser suspendiert. Das Gewichtsverhältnis von Aluminiumoxid und Sauerstoffspeicherkomponente betrug 56:44. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt. Dabei wurde die Beschichtungssuspension auf die Filterwände des Substrats beschichtet und zwar in den Eingangskanälen auf eine Länge von 60 % der Filterlänge. Die Beladung des Einlasskanals betrug 83,33 g/l, die Edelmetallbeladung 2,87 g/l mit einem Verhältnis von Palladium zu Rhodium von 10 : 3. Der so erhaltene beschichtete Filter wurde getrocknet und anschließend kalziniert. Anschließend wurden die Ausgangskanäle des Filters auf eine Länge von 60 % der Filterlänge mit der gleichen Beschichtungssuspension beschichtet. Der so erhaltene beschichtete Filter wurde erneut getrocknet und anschließend kalziniert. Die Gesamtbeladung dieses Filters betrug somit 100 g/l, die Gesamtedelmetallbeladung 3,44 g/l mit einem Verhältnis von Palladium zu Rhodium von 10 : 3. Er wird nachstehend als GPF3 bezeichnet.

### Katalytische Charakterisierung

Die Partikelfilter VGPF2, VGF3 und GPF3 wurden zusammen in einer Motorprüfstandsalterung gealtert. Diese besteht aus einer Schubabschaltungsalterung mit 950°C Abgastemperatur vor Katalysatoreingang (Maximale Betttemperatur 1030°C). Die Alterungszeit betrug 76 Stunden (siehe Motortechnische Zeitschrift, 1994, 55, 214-218).
Anschließend wurden die katalytisch aktiven Partikelfilter im gealterten Zustand an einem Motorprüfstand im sogenannten "Light-off Test" und im "lambda Sweeptest" getestet. Bei dem Light-off Test wird das Anspringverhalten bei stöchiometrischer Abgaszusammensetzung mit konstanter mittlerer Luftzahl λ bestimmt (λ =0,999 mit ±3,4% Amplitude).

Die nachfolgende Tabelle 3 enthält die Temperaturen Tso, bei denen jeweils 50% der betrachteten Komponenten umgesetzt werden.

**Tabelle 3**

| | T₅₀ HC stöch | T₅₀ CO stöch | T₅₀ NOx stöch |
|---|---|---|---|
| VGPF2 | 368 | 374 | 371 |
| VGPF3 | 387 | 395 | 396 |
| GPF3 | 323 | 325 | 319 |

Das dynamische Umsatzverhalten der Partikelfilter im lambda Sweeptest wurde in einem Bereich von λ = 0,99 - 1,01 bei einer konstanten Temperatur von 510°C bestimmt. Die Amplitude von λ betrug dabei ±3,4%. Tabelle 4 enthält den Umsatz am Schnittpunkt der CO- und der NOx-Umsatzkurven, sowie den zugehörigen HC-Umsatz der gealterten Partikelfilter.

**Tabelle 4**

| | CO/NOx Umsatz am Kreuzungspunkt | HC Umsatz am λ des CO/NOx Kreuzungspunktes |
|---|---|---|
| VGPF2 | 92 | 97 |
| VGPF3 | 93 | 97 |
| GPF3 | 97 | 98 |

Der erfindungsgemäße Partikelfilter GPF3 zeigt gegenüber VGPF2 und VGPF3 im gealterten Zustand eine deutliche Verbesserung beim Anspringverhalten und beim dynamischen CO/NOx-Umsatz.

## Patentansprüche

1. Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, das ein Wandflussfilter der Länge L und zwei Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. O_{A} bilden und wobei die Kanäle E am zweiten Ende und die Kanäle A am ersten Ende verschlossen sind, und wobei die Beschichtungen Y und Z gleiche Sauerstoffspeicherkomponenten und gleiche Trägermaterialien für Edelmetalle umfassen, **dadurch gekennzeichnet, dass** sich Beschichtung Y in den Kanälen E auf den Oberflächen O_{E} befindet und sich ausgehend vom ersten Ende des Wandflussfilters auf einer Länge von 51 bis 90 % der Länge L erstreckt und sich Beschichtung Z in den Kanälen A auf den Oberflächen O_{A} befindet und sich ausgehend vom zweiten Ende des Wandflussfilters auf einer Länge von 51 bis 90 % der Länge L erstreckt.

2. Partikelfilter gemäß Anspruch 1, **dadurch gekennzeichnet, dass** sich die Beschichtung Y ausgehend vom ersten Ende des Wandflussfilters auf 57 bis 65 % der Länge L des Wandflussfilters erstreckt.

3. Partikelfilter gemäß Anspruch 1 und/oder 2, **dadurch gekennzeichnet, dass** sich die Beschichtung Z ausgehend vom zweiten Ende des Wandflussfilters auf 57 bis 65 % der Länge L des Wandflussfilters erstreckt.

4. Partikelfilter gemäß einem oder mehreren der Ansprüche 1 bis 3, **dadurch gekennzeichnet, dass** die Beschichtungen Y und Z jeweils ein oder mehrere Edelmetalle, die auf einem oder mehreren Trägermaterialien fixiert sind, sowie ein oder mehrere Sauerstoffspeicherkomponenten enthalten.

5. Partikelfilter gemäß Anspruch 4, **dadurch gekennzeichnet, dass** die Beschichtungen Y und Z jeweils die Edelmetalle Platin, Palladium und/oder Rhodium enthalten.

6. Partikelfilter gemäß Anspruch 4 und/oder 5, **dadurch gekennzeichnet, dass** die Beschichtungen Y und Z jeweils die Edelmetalle Palladium, Rhodium oder Palladium und Rhodium enthalten.

7. Partikelfilter gemäß einem oder mehreren der Ansprüche 4 bis 6, **dadurch gekennzeichnet, dass** die Trägermaterialien für die Edelmetalle Metalloxide mit einer BET-Oberfläche von 30 bis 250 m²/g (bestimmt nach DIN 66132) sind.

8. Partikelfilter gemäß einem oder mehreren der Ansprüche 4 bis 7, **dadurch gekennzeichnet, dass** die Trägermaterialien für die Edelmetalle ausgewählt sind aus der Reihe bestehend aus Aluminiumoxid, dotiertes Aluminiumoxid, Siliziumoxid, Titandioxid und Mischoxiden aus einem oder mehreren davon.

9. Partikelfilter gemäß einem oder mehreren der Ansprüche 4 bis 8, **dadurch gekennzeichnet, dass** die Beschichtungen Y und Z als Sauerstoffspeicherkomponente ein Cer/Zirkonium/Seltenerdmetall-Mischoxide enthalten.

10. Partikelfilter gemäß Anspruch 9, **dadurch gekennzeichnet, dass** die Cer/Zirkonium/Seltenerdmetall-Mischoxide als Seltenerdmetalloxid Lanthanoxid, Yttriumoxid, Praseodymoxid, Neodymoxid und/oder Samariumoxid enthalten

11. Partikelfilter gemäß Anspruch 9 und/oder 10, **dadurch gekennzeichnet, dass** die Cer/Zirkonium/Seltenerdmetall-Mischoxide als Seltenerdmetalloxid Lanthanoxid und Yttriumoxid, Yttriumoxid und Praseodymoxid oder Lanthanoxid und Praseodymoxid enthalten.

12. Partikelfilter gemäß einem oder mehreren der Ansprüche 1 bis 11, **dadurch gekennzeichnet, dass** die Beschichtungen Y und Z beide Lanthan-stabilisiertes Aluminiumoxid, Rhodium, Palladium oder Palladium und Rhodium und eine Zirkoniumoxid, Ceroxid, Yttriumoxid und Lanthanoxid umfassende Sauerstoffspeicherkomponente umfassen.

13. Partikelfilter gemäß einem oder mehreren der Ansprüche 1 bis 11, **dadurch gekennzeichnet, dass** die Beschichtungen Y und Z beide Lanthan-stabilisiertes Aluminiumoxid, Rhodium, Palladium oder Palladium und Rhodium und eine Zirkoniumoxid, Ceroxid, Praseodymoxid und Lanthanoxid umfassende Sauerstoffspeicherkomponente umfassen.

14. Partikelfilter gemäß einem oder mehreren der Ansprüche 1 bis 13, das ein Wandflussfilter der Länge L und zwei gleiche Zusammensetzung aufweisende Beschichtungen Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen O_{E} bzw. O_{A} bilden und wobei die Kanäle E am zweiten Ende und die Kanäle A am ersten Ende verschlossen sind, und wobei die Beschichtungen Y und Z gleiche Sauerstoffspeicherkomponenten und gleiche Trägermaterialien für Edelmetalle umfassen, **dadurch gekennzeichnet, dass**
Beschichtung Y sich in den Kanälen E auf den Oberflächen O_{E} befindet und sich ausgehend vom ersten Ende des Wandflussfilters über 57 bis 65 % der Länge L erstreckt,
Beschichtung Z sich in den Kanälen A auf den Oberflächen O_{A} befindet und sich ausgehend vom zweiten Ende des Wandflussfilters über 57 bis 65 % der Länge L erstreckt,
und die Beschichtungen Y und Z Aluminiumoxid in einer Menge von 20 bis 70 Gew.-%, bezogen auf das Gesamtgewicht der Beschichtung Y bzw. Z, Rhodium, Palladium oder Palladium und Rhodium und eine Sauerstoffspeicherkomponente in einer Menge von 30 bis 80 Gew.-%, bezogen auf das Gesamtgewicht der Beschichtung Y bzw. Z enthält, wobei
die Sauerstoffspeicherkomponente Zirkoniumoxid, Ceroxid, Lanthanoxid und Yttriumoxid oder Zirkoniumoxid, Ceroxid, Lanthanoxid und Praseodymoxid oder eine Mischung aus zwei Sauerstoffspeicherkomponenten umfasst, wobei eine Sauerstoffspeicherkomponente Zirkoniumoxid, Ceroxid, Lanthanoxid und Yttriumoxid und die andere Zirkoniumoxid, Ceroxid, Lanthanoxid und Praseodymoxid enthält.

15. Verfahren zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren, **dadurch gekennzeichnet, dass** das Abgas über ein Partikelfilter gemäß einem oder mehreren der Ansprüche 1 bis 14 geleitet wird.
